# EUROPÄISCHE PATENTSCHRIFT

(11) **EP 1 707 436 B1**
(45) Veröffentlichungstag und Bekanntmachung des Hinweises auf die Patenterteilung: **23.12.2009**
(21) Anmeldenummer: 06003120.0
(22) Anmeldetag: 16.02.2006
(51) Int. Cl.: B60N 3/06, B64D 11/06

(54) **Komfortsystem für einen Sitz, insbesondere für in Reihe hintereinander angeordnete Fahr- und Fluggastsitze**
Comfort system for a seat especially for a seat of a line of seats of a vehicle or an airplane
Système de confort pour un siège, en particulier pour un siège d' une rangée de sièges passagers d' un véhicule ou d' un avion

(30) Priorität: 31.03.2005 DE 102005015142
(43) Veröffentlichungstag der Anmeldung: 04.10.2006
(73) Patentinhaber: Recaro Aircraft Seating GmbH & Co. KG, 74523 Schwäbisch Hall (DE)
(72) Erfinder: Forgatsch, Oliver, 88709 Meersburg (DE)
(74) Vertreter: Daub, Thomas

(56) Entgegenhaltungen:
- DE-A1- 10 034 385
- GB-A- 2 391 811
- US-A- 5 352 020
- US-A1- 2004 094 668

## Beschreibung

Die Erfindung bezieht sich auf ein Komfortsystem für einen Sitz, insbesondere für in Reihe hintereinander angeordnete Fahr- und Fluggastsitze gemäß der Merkmalsausgestaltung des Oberbegriffes des Patentanspruches 1.

Wie in der US Patentschrift Nr. 5, 352, 020 am Beispiel eines Komfortsystemes für einen Fluggastsitz gezeigt, weisen derartige Komfortsysteme üblicherweise ein Abstützteil in Form eines teleskopartig ausziehbaren Trägers auf, der am vorderen Randbereich der Sitzfläche des betreffenden Sitzes schwenkbar gelagert und in der Nicht-Gebrauchsstellung in einem verkürzten, zusammengefahrenen Zustand zum Kabinenboden hin abklappbar ist. Aus der Nicht-Gebrauchsstellung ist dieser Träger nach vorn und oben schwenkbar, so dass er sich zur Vertikalen schräg geneigt im Fußraum bis zu einem Bereich unterhalb der Rückenlehne des in der Reihe nächst vorderen Sitzes erstreckt. Durch Ausfahren, d. h. durch teleskopartige Verlängerung des Trägers, ergeben sich Auflageflächen für die Abstützung von Fußteilen des Sitzbenutzers.

In nachteiliger Weise bildet der starre Träger Abstützflächen mit ebenflächigem Verlauf, so dass profilierte Polsterauflagen erforderlich sind, um dem Sitzbenutzer eine angenehme, den abzustützenden Fußteilen physiologisch angepaßte Auflagefläche zu bieten. Ein weiterer besonderer Nachteil besteht darin, dass für den teleskopartig ausfahrbaren Träger und die zugehörige, einstellbare Festlegeeinrichtung ein beträchtlicher baulicher Aufwand erforderlich ist, der nicht nur hohe Herstellungskosten, sondern auch ein sehr hohes Baugewicht verursacht, was insbesondere bei Fluggastsitzen nachteilig ist.

Durch die GB-A-2 391 811 ist ein Komfortsystem für einen Fluggastsitz bekannt, bei dem im rückwärtigen Bereich und unterhalb des jeweiligen, in einer Reihe vorausgehenden Sitzes eine geneigte Fußstütze vorhanden ist, auf der für jeden Fuß des in der Reihe dahinter Platz nehmenden Sitzbenutzers ein Kompressionsschuh vorhanden ist, der mit einem betätigbaren Kompressionsteil auf den jeweiligen Fuß des Sitzbenutzers drückt, um dergestalt insbesondere bei Langstreckenflügen ein Absacken des Blutes in den unteren Beinbereich zu verhindern, um so der Thrombosegefahr wirksam zu begegnen. Aufgrund der benötigten Druckversorgung für das jeweilige Kompressionsteil baut die bekannte Lösung kompliziert und schwer auf und durch Festlegen der Füße im jeweiligen Schuhteil ist die Beinfreiheit eingeschränkt.

Durch die DE 100 34 385 A1 ist eine Fußstütze zum Abstützen der Füße einer Person bekannt, wobei die bisher teilweise üblichen brettartigen Auflagen, die im unteren rückwärtigen Bereich des jeweils vorangehenden Sitzes angebracht sind, durch eine bewegbare Fußstütze ersetzt sind. Die dahingehend bekannte Fußstütze weist ein Bandelement auf, das mit einem Auflageelement gekoppelt ist, wobei das Bandelement eine Schlaufe bildet zum Aufhängen des Auflageelementes, beispielsweise an einem in der Sitzreihe vorangehenden Vordersitz. Hierdurch ist eine mobile Fußstütze geschaffen, die auch von einem Laien auf einfache Weise an einem Vordersitz angebracht werden kann, wobei dieser die Fußstütze im Reisegepäck dann mitzuführen hat oder diese wäre vom jeweiligen Bordpersonal zur Nutzung zu übergeben. Neben dieser Einschränkung läßt die bekannte Lösung, was eine sichere definierte Abstützung anbelangt, aufgrund der gewählten pendelartigen Aufhängung über das angeführte flexible Bandelement noch Wünsche offen.

Eine dazu vergleichbare bandförmige Aufhängungslösung für eine Fußstützenbahn ist auch durch die gattungsgemäße Veröffentlichung US 2004/094668 A1 bekannt. Obwohl das Aufhängeband hier von der Länge her für die Fußstützenbahn reduziert ist und direkt unterhalb des Sitzbodens des vorangehenden Sitzes in der Sitzreihe seine Aufhängung findet, kommt es dennoch zu dem bereits beschriebenen unerwünschten Pendeleffekt, was insbesondere bei unruhigem Reiseverlauf, wie er beispielsweise bei Luftturbulenzen auftritt, sich nachteilig auf den Sitzkomfort auswirkt.

Ausgehend von diesem Stand der Technik stellt sich die Erfindung die Aufgabe, ein Komfortsystem zu schaffen, das einfach und kostengünstig herstellbar ist, sich durch eine besonderes leichtgewichtige Bauweise auszeichnet und dessen ungeachtet dem Sitzbenutzer einen erhöhten Komfort durch angenehmere Abstützung bietet.

Diese Aufgabe löst erfindungsgemäß ein Komfortsystem, das die Merkmale des Anspruches 1 in seiner Gesamtheit aufweist.

Danach sieht die Erfindung anstelle eines starren und/oder schwenkbaren und/oder teleskopartig längenveränderbaren Bauteiles ein im wesentlichen flexibles Abstützelement vor, das, da seine Festlegeeinrichtung am vorderen zweier in Reihe angeordneten Sitze angebracht ist, sich bei der Gebrauchsstellung von vorn in den Fußraum hinein mit einer Krümmung erstreckt, die sich der Kontur der abgestützten Fußteile des Sitzbenutzers anschmiegt. Dadurch ergibt sich für den Sitzbenutzer, ohne dass Polster-Formteile erforderlich wären, eine besonders angenehme, physionomisch günstige Abstützung der betreffenden Fußteile, so dass ein Höchstmaß an Komfort erreicht ist. Gleichzeitig ergibt sich eine wesentliche Gewichtsersparnis gegenüber den bekannten Systemen, die eine Einstellkinematik benötigen, wie sie beispielsweise bei den üblichen starren, teleskopartig ausfahrbaren Abstützteilen erforderlich ist, so dass sich der zusätzliche Vorteil der äußerst geringen Herstellungskosten ergibt.

Die Festlegeeinrichtung ist im vorderen Bereich der Unterseite des zugeordneten Sitzes angebracht. Da bei Verkehrsmitteln zur Personenbeförderung, insbesondere Verkehrsflugzeugen, der Bereich unterhalb des vorderen von zwei hintereinander liegenden Sitzen als Fußraum für den Benutzer des jeweils hinteren Sitzes ausgenutzt wird, ist bei dieser Anordnung der Festlegeeinrichtung nur eine verhältnismäßig geringe Baulänge, bezogen auf die Sitzlängsrichtung, für das Abstützteil erforderlich, um die gewünschte Abstützung der Fußteile des Benutzers zu bilden.

Hierbei ist die Festlegeeinrichtung so ausgebildet, dass sie das Abstützteil bei der Nicht-Gebrauchsstellung lösbar in einer an die Unterseite des Sitzes angenäherten Stellung hält. Bei Nicht-Gebrauch, d. h. bei verstautem Zustand, ergibt sich hierbei für das flexible Abstützteil lediglich ein ganz geringer Raumbedarf, da sich das Abstützteil aufgrund seiner Flexibilität an die Unterseite des Sitzes anschmiegen kann, so dass beim Zustand des Nicht-Gebrauchs praktisch der gesamte Fußraum ungehindert frei bleibt. Das Abstützteil, vorzugsweise in Form des Netzes, ist mit seinem vorderen Ende an der Unterseite des zugeordneten Sitzes im vorderen Bereich von dessen Sitzstruktur festgelegt sein. Der dem vorderen, festgelegten Ende des Abstützteiles, vorzugsweise in Form des Netzes, entgegengesetzte hintere Rand des Abstützteiles kann mittels eines bewegbaren Trägers der Festlegeeinrichtung aufgehängt sein, der mit seinem einen, vorderen Ende in der Nähe des festgelegten vorderen Endes des Abstützteiles an der Trägerstruktur des Sitzes um eine zur Sitzlängsrichtung senkrechte Schwenkachse schwenkbar gelagert ist und mit seinem von der Schwenklagerung nach hinten auskragenden hinteren Ende die Aufhängung für den hinteren Rand des Abstützteiles (beispielsweise Netzes) bildet.

Vorzugsweise weist das flexible Abstützteil zumindest eine bandartige, mindestens einen Teil der Auflagefläche bildende Bahn auf. Wenn diese Bahn, entsprechend einem besonders vorteilhaften Ausführungsbeispiel, durch ein Gewebe oder Geflecht gebildet ist, vorzugsweise in Form eines Netzes, das aus einem im Hinblick auf Feuersicherheit ausgewählten Material hergestellt ist, kann das Abstützteil ein an der Festlegeeinrichtung aufgehängtes Fußnetz bilden, in dem Fußteile des Benutzers hängemattenartig aufnehmbar sind. Ein so geschaffenes Fußnetz gewährleistet die besonders angenehme Abstützung der im Netz aufgenommenen Fußteile des Benutzers.

Bei einer besonders einfachen und leichtgewichtigen Bauweise weist der Träger der Festlegeeinrichtung einen im Umriß im wesentlichen U-förmigen Bügel auf, an dessen zur Sitzlängsrichtung quer verlaufendem Steg der hintere Rand des beispielsweise als Netz ausgebildeten Abstützteiles befestigt ist und dessen in Längsrichtung entlang der Seitenränder des Abstützteiles verlaufende Schenkel jeweils endseits zur Bildung der Schwenklagerung an der Sitzstruktur angelenkt sind.

Wenn eine Federanordnung vorhanden ist, die den Bügel in eine an die Unterseite des Sitzes angenäherte Schwenklage, die der Nicht-Gebrauchsstellung des Netzes entspricht, vorspannt, aus der der Bügel gegen die wirkende Federkraft zum Überführen in die Gebrauchsstellung von der Unterseite des Sitzes weg bewegbar ist, gestaltet sich die Handhabung, d. h. das Überführen in die Gebrauchsstellung und das Verstauen des Abstützteiles (beispielsweise Netzes) für den Nicht-Gebrauch, besonders einfach.

Vorzugsweise weist die Schwenklagerung des Bügels eine Rasteinrichtung auf, mittels deren die Schwenkbewegung des Bügels in zumindest einer bevorzugten Schwenklage lösbar verrastbar ist. Die Rasteinrichtung kann beispielsweise so ausgebildet sein, dass für die Gebrauchsstellung eine Raststellung vorgesehen ist, in der sich das hintere Ende des Bügels und das daran aufgehängte hintere Ende des Netzes in einem solchen Abstand vom Kabinenboden befindet, dass Fußteile des Benutzers in einer durch das Netz gebildeten hängemattenartigen Mulde aufnehmbar sind.

Nachstehend ist die Erfindung anhand eines in der Zeichnung dargestellten Ausführungsbeispieles im einzelnen erläutert. Es zeigen:
- Fig. 1 eine schematisch vereinfacht und abgebrochen gezeichnete perspektivische Schrägansicht lediglich der wesentlichen Strukturelemente des Sitzbereiches eines Fluggastsitzes, ohne Verkleidungen, Polsterungen, Zusatzeinrichtungen oder dergleichen, versehen mit einem Ausführungsbeispiel des erfindungsgemäßen Komfortsystemes in Form eines Fußnetzes, dargestellt in der Gebrauchsstellung mit im Fußnetz aufgenommenen Fußteilen eines Benutzers;
- Fig. 2 eine Seitenansicht lediglich des Bereiches eines quer verlaufenden Tragholmes der Sitzstruktur von Fig. 1 mit daran angelenkter Festlegeeinrichtung für das Fußnetz gemäß dem Ausführungsbeispiel von Fig. 1 und
- Fig. 3 eine perspektivische Schrägansicht des in Fig. 2 Gezeigten.

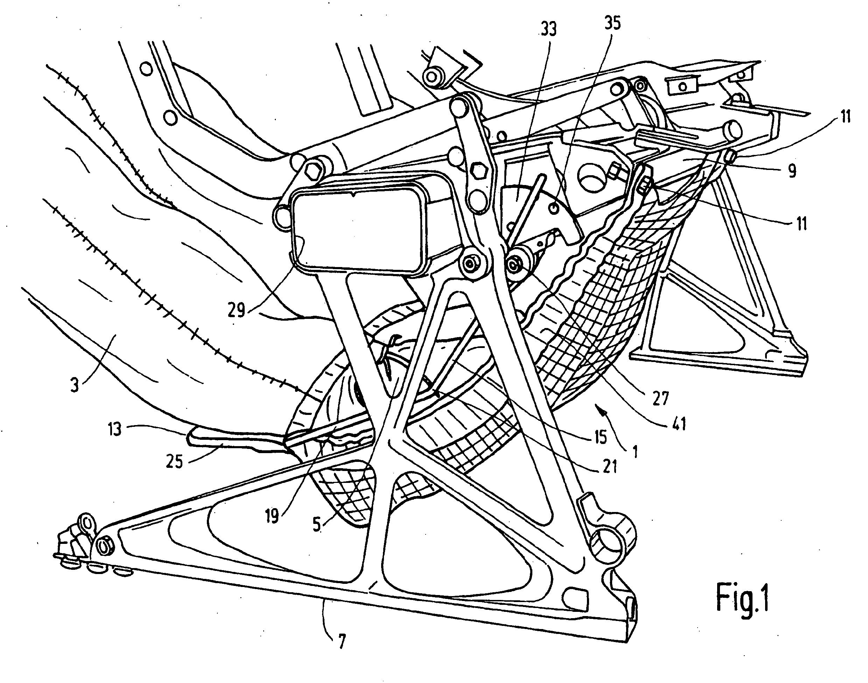

Das erfindungsgemäße Komfortsystem ist in der vorliegenden Beschreibung anhand eines Ausführungsbeispieles erläutert, bei dem ein Abstützteil in Form eines als Ganzes mit 1 bezeichneten Fußnetzes einem Fluggastsitz zugeordnet ist, der Teil einer Reihe von hintereinander angeordneten Sitzen bildet. Genauer gesagt handelt es sich bei dem Sitz von Fig. 1 um einen Sitz, hinter dem sich ein entsprechender weiterer Sitz (nicht gezeigt) befindet, dessen Sitzbenutzer, von dem eine Unterschenkelpartie 3 abgebrochen angedeutet ist, seine Schuhe 5 in das Fußnetz 1 gestellt hat. Wie aus Fig. 1 zu ersehen ist, ist das in der Gebrauchsstellung gezeigte Fußnetz 1 so aufgehängt, dass die Schuhe 5 in dem Fußnetz 1 in geringem Abstand oberhalb des Kabinenbodens 7 aufgenommen sind, wobei sich das Fußnetz 1 aufgrund seiner Flexibilität hängenmattenartig an die Schuhe 5 des Benutzers anschmiegt.

Wie Fig. 1 zeigt, ist das Fußnetz 1 an seinem vorderen Ende an einer vorderen Endleiste 9 der Sitzstruktur mittels Befestigungsschrauben 11 befestigt, die sich in der Nähe des zugeordneten Seitenrandes des Fußnetzes 1 befinden. Als Träger für das von der Endleiste 9 frei hängende Fußnetz 1, d. h. zum Halten des Fußnetzes 1 in der in Fig. 1 gezeigten Gebrauchsstellung sowie zum Überführen in eine Nicht-Gebrauchsstellung, ist eine Festlegeeinrichtung mit einem bewegbaren Träger vorhanden, an dem das hintere Ende 13 des Fußnetzes 1 aufgehängt ist.

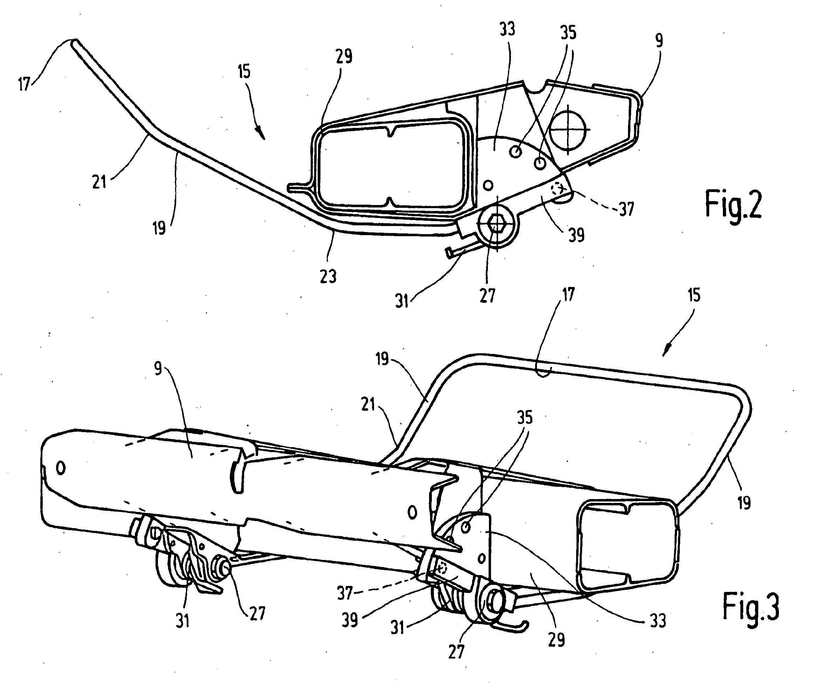

Die Festlegeeinrichtung weist als beweglichen Träger einen aus rundem Federstahl einstückig gebogenen Bügel 15 auf. Wie Fig. 2 und 3 deutlicher zeigen, ist der Bügel 15 im Umriß U-förmig gestaltet, mit einem geraden, hinteren Quersteg 17 (Fig. 3) und sich an diesem anschließenden, längeren, in Sitzlängsrichtung verlaufenden seitlichen Schenkeln 19, die an Biegestellen 21 und 23 leicht abgebogen sind. Das hintere Ende 13 des Fußnetzes 1 ist am hinteren Quersteg 17 des Bügels 15 mittels einer den entsprechenden Endteil des Bügels 15 aufnehmenden Endtasche 25 des Fußnetzes 1 aufgehängt.

Die dem Quersteg 17 entgegengesetzten Enden der Schenkel 19 des Bügels 15 sind unterhalb eines quer verlaufenden Tragholmes 29 der Sitzstruktur, gegenüber diesem leicht nach vorn versetzt, an einer Schwenklagerung 27 angelenkt, die für jeden Schenkel 19 eine zur Sitzlängsrichtung quer verlaufende Schwenkachse definiert.

Fig. 2 und 3 zeigen den Bügel 15 in der an die Unterseite des Sitzes angenäherten Schwenklage, die der Nicht-Gebrauchsstellung entspricht. Aufgrund der an den Biegestellen 21 und 23 leicht gekrümmten Form der Schenkel 19 des Bügels 15 schmiegt sich dieser bei dieser Schwenklage eng an die Unterseite des Sitzes an, so dass das Fußnetz 1 bei der Nicht-Gebrauchsstellung eng an der Unterseite des zugehörigen Sitzes anliegt, somit äußerst geringen Stauraum benötigt und den Fußraum daher im wesentlichen frei läßt. Der Bügel 15 ist in diese Schwenklage durch eine Drehfederanordnung vorgespannt, die an jeder Schwenklagerung 27 eine den Schwenkzapfen umringende Schlingfeder 31 aufweist. Um den Bügel 15 gegen die wirkende Federkraft zu schwenken, um das Fußnetz 1 in die Gebrauchsstellung zu bringen, muß der Benutzer lediglich durch Druck auf das Ende 13 des Fußnetzes 1 und damit auf den Quersteg 17 des Bügels 15 das Fußnetz 1 in die in Fig. 1 gezeigte Lage bringen. Wie lediglich in Fig. 2 und 3 deutlich dargestellt ist, ist an jeder Schwenklagerung 27 dem betreffenden Ende des Schenkels 19 des Bügels 15 eine Rasteinrichtung zugeordnet, die jeweils eine an der Sitzstruktur befestigte Rastscheibe 33 mit Rastvertiefungen 35 aufweist, in die eine federbelastete Rastkugel 37 an einem nur in Fig. 2 und 3 dargestellten Rastarm 39 einrasten kann.

Die Verrastung kann so ausgelegt sein, dass der Bügel 19 in der in Fig. 1 gezeigten Stellung lösbar verrastet ist, in der sich der Quersteg 17 des Bügels 15 oberhalb des Kabinenbodens 7 befindet, dass durch eine stärkere Krafteinwirkung der Quersteg 17 jedoch bis zum Kabinenboden 7 herab bewegt werden kann, so dass eine Verformung des Bügels 15 bei unsachgemäß starker Krafteinwirkung (beispielsweise durch Vandalismus) vermieden ist.

Wie Fig. 1 zeigt, ist das Fußnetz 1 mit einer seitlichen Einfassung 41 versehen, die sich von der hinteren Endtasche 25 bis zum vorderen Ende des Fußnetzes 1 an den Befestigungsschrauben 11 erstreckt. Diese Einfassung 41 kann durch elastische Bänder gebildet sein.

Wie aus den Fig. ersichtlich, erstreckt sich das Fußnetz 1 entsprechend der Form, Größe und Anbringung des Bügels 15 im wesentlichen über die gesamte Breite des Sitzteiles. Die bereits erwähnte Verrastung kann so ausgelegt sein, dass bei in Gebrauchsstellung befindlichem Fußnetz 1 der Benutzer ohne übermäßigen Kraftaufwand, mit den Fußspitzen am hinteren Ende 13 des Fußnetzes 1 angreifend, dieses mit Unterstützung der Kraft der Federn 31 aus der Verrastung lösen kann, so dass die Federn 31 das Fußnetz 1 in die Nicht-Gebrauchsstellung überführen, wo es an der Unterseite des Sitzes verstaut ist.

## Patentansprüche

1. Komfortsystem für einen Sitz, insbesondere für in Reihe hintereinander angeordnete Fahr- und Fluggastsitze, mit mindestens einem Abstützteil (1), das von einer Nicht-Gebrauchsstellung in eine Gebrauchsstellung bringbar ist, bei der Fuß- und Beinteile (3, 5) eines Sitzbenutzers auf zumindest einer Auflagefläche abgestützt sind, wobei das jeweilige Abstützteil (1), mittels einer Festlegeeinrichtung (15) in der Gebrauchsstellung gehalten, sich zumindest teilweise in einem Fußraum erstreckt, der vom Benutzer des hinteren von zwei in Reihe angeordneten Sitzen nutzbar ist, wobei das Abstützteil (1) in der Nicht-Gebrauchsstellung den Fußraum freigibt, wobei das Abstützteil (1) im wesentlichen flexibel ist und in der Gebrauchsstellung zumindest teilweise einem gekrümmten Verlauf nachfolgt, wobei die Festlegeeinrichtung (15) am vorderen der beiden in Reihe angeordneten Sitze und im vorderen Bereich der Unterseite des zugeordneten Sitzes angebracht ist, und wobei die Festlegeeinrichtung (15) das Abstützteil (1) bei der Nicht-Gebrauchsstellung lösbar in einer an die Unterseite des Sitzes angenäherten Stellung hält, **dadurch gekennzeichnet, dass** das Abstützteil (1) mit seinem vorderen Ende an der Unterseite des zugeordneten Sitzes im vorderen Bereich von dessen Sitzstruktur festgelegt ist und dass die Festlegeeinrichtung einen bewegbaren Träger (15) aufweist, der mit seinem einen, vorderen Ende in der Nähe des festgelegten vorderen Endes des Abstützteiles (1) an der Trägerstruktur des Sitzes um eine zur Sitzlängsrichtung senkrechte Schwenkachse schwenkbar gelagert ist und mit seinem von der Schwenklagerung (27) nach hinten auskragenden, hinteren Ende (17) die Aufhängung für den hinteren Rand (13) des Abstützteiles (1) bildet.

2. Komfortsystem nach Anspruch 1, **dadurch gekennzeichnet, dass** das Abstützteil (1) zumindest eine bandartige, mindestens einen Teil der Auflagefläche bildende Bahn aufweist.

3. Komfortsystem nach Anspruch 2, **dadurch gekennzeichnet, dass** die Bahn durch ein Gewebe oder Geflecht, vorzugsweise in netzartige Gestalt (1), aus einem im Hinblick auf Feuersicherheit ausgewählten Material gebildet ist.

4. Komfortsyrstem nach einem der Ansprüche 1 bis 3, **dadurch gekennzeichnet, dass** der Träger der Festlegeeinrichtung einen im Umriß im wesentlichen U-förmigen Bügel (15) aufweist, an dessen zur Sitzlängsrichtung quer verlaufendem Steg (17) der hintere Rand (13) des beispielsweise als Netz ausgebildeten Abstützteiles (1) befestigt ist und dessen in Längsrichtung entlang der Seitenränder des Abstützteiles (1) verlaufende Schenkel (19) jeweils endseits zur Bildung der Schwenklagerung (27) an der Sitzstruktur angelenkt sind.

5. Komfortsystem nach Anspruch 4, **dadurch gekennzeichnet, dass** eine Federanordnung (31) vorhanden ist, die den Bügel (15) in eine an die Unterseite des Sitzes angenäherte Schwenklage, die der Nicht-Gebrauchsstellung des vorzugsweise als Netz ausgebildeten Abstützteiles (1) entspricht, vorspannt, aus der der Bügel (15) gegen die wirkende Federkraft zum Überführen in die Gebrauchsstellung von der Unterseite des Sitzes wegbewegbar ist.

6. Komfortsystem nach Anspruch 5, **dadurch gekennzeichnet, dass** die Federanordnung je eine jedem Schenkel (19) des Bügels (15) zugeordnete, die Schwenkachse umringende Schlingfeder (31) aufweist.

7. Komfortsystem nach einem der Ansprüche 4 bis 6 **dadurch gekennzeichnet, dass** die Schwenklagerung (27) des Bügels (15) eine Rasteinrichtung (33, 35, 37, 39) aufweist, mittels deren die Schwenkbewegung des Bügels (15) in zumindest einer bevorzugten Schwenklage lösbar verrastbar ist.

## Claims

1. Comfort system for a seat, especially for a seat of a line of seats of a vehicle or an airplane, with at least one supporting part (1) which can be brought from an inoperative position into an operative position in which a seat user's foot and leg parts (3, 5) are supported on at least one supporting surface, wherein the respective supporting part (1), held in the operative position by means of a securing device (15), at least partially extends in a foot space which can be used by the user of the rear of two seats arranged in a line, wherein, in the inoperative position, the supporting part (1) clears the foot space, wherein the supporting part (1) is substantially flexible and, in the operative position, at least partially follows a curved course, wherein the securing device (15) is attached to the front of the two seats arranged in a line and in the front region of the lower side of the assigned seat, and wherein, in the inoperative position, the securing device (15) holds the supporting part (1) releasably in a position close to the lower side of the seat, **characterized in that** the front end of the supporting part (1) is secured to the lower side of the assigned seat in the front region of the seat structure thereof, and **in that** the securing device has a movable support (15) which, at its one, front end in the vicinity of the secured front end of the supporting part (1), is mounted on the support structure of the seat in a manner such that it can pivot about a pivot axis perpendicular to the longitudinal direction of the seat, and at its rear end (17) projecting to the rear from the pivot mounting (27), forms the suspension for the rear edge (13) of the supporting part (1).

2. Comfort system according to Claim 1, **characterized in that** the supporting part (1) has at least one strip-like surface element forming at least part of the supporting surface.

3. Comfort system according to Claim 2, **characterized in that** the surface element is formed by a woven or knitted fabric, preferably in net-like form (1), made from a material selected with regard to fireproofness.

4. Comfort system according to one of Claims 1 to 3, **characterized in that** the support of the securing device has a bow (15) which is substantially U-shaped in outline and to the web (17) of which, the web running transversely with respect to the longitudinal direction of the seat, the rear edge (13) of the supporting part (1), which is designed, for example, as a net, is fastened, and the legs (19) of which, the legs running in the longitudinal direction along the side edges of the supporting part (1), are each coupled on the end side to the seat structure in order to form the pivot mounting (27).

5. Comfort system according to Claim 4, **characterized in that** there is a spring arrangement (31) which prestresses the bow (15) into a pivoted position which is close to the lower side of the seat, corresponds to the inoperative position of the supporting part (1), which is preferably designed as a net, and from which the bow (15) can be moved away from the lower side of the seat counter to the effective spring force in order to be transferred into the operative position.

6. Comfort system according to Claim 5, **characterized in that** the spring arrangement has a respective wrap spring (31) assigned to each leg (19) of the bow (15) and surrounding the pivot axis.

7. Comfort system according to one of Claims 4 to 6, **characterized in that** the pivot mounting (27) of the bow (15) has a latching device (33, 35, 37, 39) by means of which the pivoting movement of the bow (15) can be latched releasably in at least one preferred pivoted position.

## Revendications

1. Système de confort pour un siège, en particulier pour un siège d'une ligne de sièges passagers d'un véhicule ou d'un avion, avec au moins une partie de soutien (1), qui peut être amenée d'une position de non utilisation à une position d'utilisation, dans laquelle des parties de pied et de jambe (3, 5) d'un utilisateur du siège sont appuyées sur au moins une surface d'appui, dans lequel la partie de soutien respective (1), maintenue dans la position d'utilisation au moyen d'un dispositif de fixation (15), s'étend au moins partiellement dans un espace de pieds qui est utilisable par l'utilisateur du siège arrière de deux sièges disposés en ligne, dans lequel la partie de soutien (1) dans sa position de non utilisation libère l'espace de pieds, dans lequel la partie de soutien (1) est essentiellement flexible et, dans sa position d'utilisation, suit au moins partiellement un tracé courbe, dans lequel le dispositif de fixation (15) est installé sur le siège avant des deux sièges disposés en ligne et dans la région avant du côté inférieur du siège associé, et dans lequel le dispositif de fixation (15) maintient, dans la position de non utilisation, la partie de soutien (1) de façon détachable dans une position proche du côté inférieur du siège, **caractérisé en ce que** la partie de soutien (1) est fixée par son extrémité avant au côté inférieur du siège associé, dans la région avant de la structure de ce siège, et **en ce que** le dispositif de fixation comprend un support mobile (15), qui est monté avec sa première extrémité avant à proximité de l'extrémité avant fixée de la partie de soutien (1) sur la structure de support du siège de façon pivotante autour d'un axe de pivotement perpendiculaire à la direction longitudinale du siège, et forme avec son extrémité arrière (17), dépassant vers l'arrière l'appui pivotant (27), la suspension pour le bord arrière (13) de la partie de soutien (1).

2. Système de confort selon la revendication 1, **caractérisé en ce que** la partie de soutien (1) comprend au moins une toile en forme de bande, formant au moins une partie de la surface d'appui.

3. Système de confort selon la revendication 2, **caractérisé en ce que** la toile est formée par un tissu ou treillis, de préférence en forme de filet (1), en un matériau sélectionné pour sa résistance au feu.

4. Système de confort selon l'une quelconque des revendications 1 à 3, **caractérisé en ce que** le support du dispositif de fixation comprend un étrier (15) avec un contour essentiellement en forme de U, comprenant une entretoise (17) orientée transversalement à la direction longitudinale du siège à laquelle est fixé le bord arrière (13) de la partie de soutien (1) se présentant par exemple sous la forme d'un filet, et des branches (19) orientées en direction longitudinale le long des bords latéraux de la partie de soutien (1), qui sont respectivement articulées à leur extrémité sur la structure du siège pour former l'appui pivotant (27).

5. Système de confort selon la revendication 4, **caractérisé en ce qu'**il se trouve un agencement de ressorts (31), qui précontraint l'étrier (15) dans une position de pivotement proche du côté inférieur du siège, laquelle correspond à la position de non utilisation de la partie de soutien (1) se présentant de préférence sous la forme d'un filet, et à partir de laquelle l'étrier (15) peut être écarté du côté inférieur du siège contre la force active du ressort pour être transféré dans la position d'utilisation.

6. Système de confort selon la revendication 5, **caractérisé en ce que** l'agencement de ressorts comprend respectivement un ressort à boucle (31) entourant l'axe de pivotement et associé à chaque branche (19) de l'étrier (15).

7. Système de confort selon l'une quelconque des revendications 4 à 6, **caractérisé en ce que** l'appui pivotant (27) de l'étrier (15) comprend un dispositif à encoches (33, 35, 37, 39), au moyen duquel le mouvement de pivotement de l'étrier (15) peut être calé de façon détachable dans au moins une position de pivotement préférée.
